# EUROPÄISCHE PATENTSCHRIFT

(11) **EP 1 999 832 B1**
(45) Veröffentlichungstag und Bekanntmachung des Hinweises auf die Patenterteilung: **03.08.2011**
(21) Anmeldenummer: 07723165.2
(22) Anmeldetag: 10.03.2007
(51) Int. Cl.: H02G 3/04

(54) **ANORDNUNG ZUM UMHÜLLEN VON MINDESTENS EINER KABELADER EINES ELEKTRISCHEN KABELS**
ARRANGEMENT FOR SERVING AT LEAST ONE CABLE CORE OF AN ELECTRICAL CABLE
DISPOSITIF POUR ENVELOPPER AU MOINS UN FIL D'UN CABLE ELECTRIQUE

(30) Priorität: 24.03.2006 DE 102006013553
(43) Veröffentlichungstag der Anmeldung: 10.12.2008
(73) Patentinhaber: nkt cables GmbH, 51063 Köln (DE)
(72) Erfinder: WASCHK, Volker, 51519 Odental (DE)
(86) Internationale Anmeldenummer: PCT/EP2007/002113
(87) Internationale Veröffentlichungsnummer: WO 2007/110145

(56) Entgegenhaltungen:
- EP-A1- 0 750 378
- EP-A2- 0 536 541
- DE-A1- 3 123 040
- FR-A- 2 812 465
- GB-A- 1 486 445

## Beschreibung

Die Erfindung betrifft eine Anordnung zum Umhüllen von mindestens den Kabeladern eines Mittel-oder Hochspannungskabels.

In zunehmendem Maße wird bei der Installation von Hochspannungskabeln und Freileitungen die Forderung erhoben, elektromagnetische Felder abzuschirmen. Hierbei sind Hochspannungskabel gegenüber Freileitungen von Vorteil, weil sie in ihrer Umgebung kein elektrisches Feld erzeugen. Allerdings ist bei gängigen Kabelkonstruktionen das durch die Kabelströme erzeugte niederfrequente äußere Magnetfeld vorhanden.

Eine magnetische Abschirmung von erdverlegten Drehstromkabeln kann dadurch erreicht werden, dass man die drei Adern des Kabelsystems in ein Rohr aus hochpermeablem Material einzieht, beispielsweise in ein handelsübliches Stahlrohr. Nachteil eines Stahlrohres zur Abschirmung ist die Tatsache, dass es einerseits aus mechanischen Gründen und zum Zweck der Abschirmung eine große Wanddicke von einigen Millimetern (etwa 4...10 mm) aufweisen muss und dass es andererseits dadurch nicht flexibel ist und in kurzen Rohrabschnitten zusammengeschweißt werden muss. Zudem muss es gegen Korrosion durch die Bodenfeuchte dadurch geschützt werden, dass es außen mit einem Kunststoffmantel und innen meist mit einer Auffüllung aus Beton versehen wird. Eine weitere arbeitstechnische Schwierigkeit besteht darin, dass aus verlegetechnischen Gründen zunächst zusätzlich drei Kunststoffrohre in das Stahlrohr einzuziehen sind, in die anschließend die drei Kabeladern einzeln eingezogen werden können.

Es ist schon eine Abschirmplatte für zufällig auftretende und zufällig orientierte Magnetfelder aus Schichten von kornorientierten Siliziumeisenblech vorgeschlagen worden (EP 0977 474 B1). Hierbei werden die relevanten Richtungen der leichten Magnetisierung senkrecht zueinander angeordnet. In Kabelkonstruktionen ist eine feste Magnetfeldrichtung vorhanden, so dass solche Abschirmplatten nicht geeignet sind.

In der Kabeltechnik sind schon Abschirmmäntel bekannt geworden, welche aus mindestens einer Lage von auf ein Kabel aufgewickelte weichmagnetische Materialstreifen bestehen (DE 19807527 A1, DE 3123040 A1, DE 1440008 A1, EP 0290343 B1). Solche Konstruktionen sind für die unmittelbare Herstellung eines Kabels vorgesehen. Die Anordnungen sind nicht geeignet für die nachträgliche Anbringung an oder über ein Kabel während der Kabelmontage, insbesondere wenn das Kabel in einem Kabelgraben liegt.

Weiterhin sind biegsame Anordnungen bekannt (DE 4229689 A1, DE 4132985 C2, DE 3914935 C1), bei denen die abschirmenden Komponenten entweder gleichmäßig verteilt oder als Gitter ausgestaltet sind.

Außerdem sind zylindrische Abschirmanordnungen der Fachwelt bekannt, deren Abwicklung als Streifen zu bezeichnen sind (DE 625736 C, DE 474990 C, AT 396858 B). Diese Abschirmungen sind allerdings starr und können nicht um die Kabelader gelegt, sondern müssen aufgeschoben werden.

Es ist die Aufgabe der Erfindung, eine Anordnung zur magnetischen Abschirmung bei elektrischen Kabeladern vorzuschlagen, die einfach herstellbar und nachträglich bei der Kabelmontage einfach einsetzbar ist.

Die Lösung der Aufgabe findet sich im Hauptanspruch, wobei in den Unteransprüchen vorteilhafte Ausgestaltungen formuliert sind.

Der Kern der Erfindung besteht darin, dass die Kabeladernumhüllung ein flächiges Gebilde (eine "Abschirmmatte") ist, welches auf einer Strecke des Kabels um mindestens eine Kabelader gelegt ist und parallel zur Längserstreckung des Kabels mindestens einen Überlappungsbereich bildet. Die Umhüllung enthält Streifen aus weichmagnetischem Material, die mit ihrer magnetischen Vorzugsrichtung quer zur Längserstreckung des Kabels angeordnet und mindestens in zwei Lagen derart eingelagert sind, dass die Streifen in einer ersten Lage auf Lücke der Materialstreifen einer zweiten Lage liegen, mit dem Zweck, dass die Materialstreifen bei Biegung der Kabelumhüllung gegeneinander rutschen können.

Bei der magnetischen Schirmung eines Drehstromkabels ist wichtig, dass alle drei Kabeladern gemeinsam von der hochpermeablen Umhüllung umfasst werden. Um hohe magnetische Leitwerte der Umhüllung zu erhalten und um das die Kabeladern etwa zirkular umgebende Magnetfeld optimal zu führten, ist es wichtig, die magnetische Vorzugsrichtung der Materialstreifen möglichst quer zur Längsrichtung der Kabeladern einzustellen. Die Streifen sollten eine magnetische Kornorientierung in Längsrichtung haben. Auch bei nicht-kornorientierten Streifen wird durch die Lage möglichst quer zur Längsrichtung der Kabeladern der magnetische Widerstand der Umhüllung minimiert.

Die Materialstreifen sollten in einer der Lagen flach nebeneinander (auf Stoß mit möglichst kleiner Lücke) liegen. Die Abstände der Stoßfugen sollten klein sein (etwa 0 bis 10 mm).

Die Umhüllung besteht aus einem Träger - beispielsweise aus Kunststoff, in den die Streifen eingebettet sind. Als Träger ist ein Material vorzusehen, welches eine wasserdichte Einbettung der Materialstreifen erlaubt. Hierbei eignet sich Kunststoff am besten, doch kommen auch korrosionsbeständige Metallfolien, wie Edelstahl oder Aluminium in Betracht, in die die Streifen kaschiert werden können.

Die hochpermeablen Materialstreifen können auch in zwei Lagen zueinander im Dachziegelverband eingebracht sind. Das Stapelverfahren ist eine für die Kabeltechnik übliche Anordnung (entweder versetzte Lagen übereinander, bei denen die Materialstreifen auf Lücke/Stoßfuge liegen oder aber) gelegt sind

Durch eine solche Stapelanordnung tritt keine oder nur eine geringe Einschränkung der Biegsamkeit der Umhüllung auf. Darin besteht ein wesentlicher Vorteil der Anordnung, nämlich dass die Abschirmmatte sehr flexibel ist und in großen Längen auf Spulen auf- und abwickelbar ist. Zudem kann sie um Kabeladern (bei Rohrkabeln oder Seekabeln) oder um Einziehrohre für Kabeladern gelegt und mit diesen anschließend gebogen werden.

Das flächige Gebilde ist über den Kabelumfang rundum geschlossen. Die Naht der Umhüllung ist durch Überlappungsbereiche derart ausgebildet, dass der magnetische Durchgriff des vom Kabel ausgehenden magnetischen Wechselfeldes minimiert ist.

Die Abschirmwirkung wird dadurch erreicht, dass einerseits mit der mindestens doppellagigen Anordnung der Materialstreifen-eine hohe Überdeckung erzielt wird und dass andererseits die Ränder der Umhüllung in Längserstreckung in einem oder mehreren Überlappungsbereichen möglichst eng aneinander zu liegen kommen. Dies ist insbesondere wichtig, wenn die Materialstreifen mit einer Korrosionsschutzschicht versehen sind, wobei zwischen den Streifen im Überlappungsbereichbereich wegen der Schichtdicke noch ein endlicher Abstand vorhanden ist. Durch das Parallelführen der beiden Seitenränder der Umhüllung soll der Magnetfluss im Überlappungsbereich so geführt werden, dass der magnetische Widerstand des Spaltes hinreichend klein gemacht wird.

Hierzu hat die Querausdehnung der Umhüllung eine den Umfang des Kabels übersteigende Überlänge. Die aus der Überlänge gebildeten Ränder können entweder übereinander oder vom Kabel abstehend nebeneinander gelegt sein. Im letzteren Fall wird die radiale Überlänge hochgeklappt und die Umhüllung ist in Längsrichtung des Kabels hermetisch geschlossen.

Es gibt unterschiedliche Möglichkeiten, eine dichte Nahtbildung (Überlappung der Ränder) herzustellen. Im Überlappungsbereich können die Ränder der Umhüllung verklebt oder - durch Wärmeeinwirkung, z.B. mit einem beheizbaren Schwert - verschweißt werden. Wesentlich ist, dass bei dem Schließen des Überlappungsbereichs der Korrosionsschutz nicht verletzt wird.

Eine weitere Möglichkeit, den Überlappungsbereich zu verschließen, ist das Aufbringen einer U-förmigen Schiene oder das beidseitige Mitführen von zwei Schienen (jeweils beispielsweise aus Al oder Cu). Bei einer beidseitigen Anordnung von Schienen, können diese miteinander verschraubt oder verklemmt werden, um so den überlappenden Bereich der Umhüllung fest zusammenzupressen, ggfs. dort sogar das synthetische Material wegzudrücken (Kaltverformung), um den Spalt zu verringern. Werden die Innenseiten dieser Schienen ebenfalls mit der hochpermeablen Folie beschichtet, so braucht die Umhüllung nur von beiden Seiten in diese Schienen eingelegt zu werden (ohne Überlappung), wobei die Folien der Schienen für die erforderliche Überlappung der hochpermeablen Bereiche sorgt.

Bei elektrischer Durchverbindung und beidseitiger Erdung solcher metallischer Schienen ist man auch in der Lage, eventuelle Nullströme des Kabels durch induzierte Gegenströme zu kompensieren. Auftretende Nullströme in einem Drehstromsystem können nur dadurch abgeschirmt werden, dass sie in hochleitfähigen elektrischen Leitern in ihrer Umgebung Gegenströme induzieren, die durch ein Gegenfeld das Magnetfeld kompensieren. Dies gilt auch bei einem anderen als dreiadrigem Kabelaufbau, wo keine Symmetrie der von den Kabeladern ausgehenden Magnetfelder vorliegt.

Die vorgesehenen Materialien sollen eine hohe relative magnetische Permeabilität haben. Daher wird bevorzugt vorgeschlagen, als Material Silizium-Eisen (mit einem Si-Gehalt von 1,5 bis 3 %; "Elektrobänder") oder µ-Metall oder amorphe Glaslegierung einzusetzen. Elektrobänder bestehen aus Silizium-Stahlblechbändem und werden im Transformatoren- und Elektromaschinenbau verwendet. Sie bieten eine wirksame und besonders kostengünstige Lösung.

Da diese Materialien korrosionsanfällig sind, sollten die Materialstreifen mit einem Korrosionsschutz versehen sein. Die hermetische Einbettung der Streifen in eine Kunststoff-Schicht kann hierzu ausreichen. Hierbei kann ein Laminierverfahren verwendet werden, bei dem die Streifen quer zur Bahnlänge der Umhüllung eingelegt und verschweißt werden. Der Korrosionsschutz kann auch dadurch hergestellt sein, dass die Materialstreifen allseitig zinkbeschichtet und/oder allseitig kunststoffbeschichtet sind. Möglich ist auch das beidseitige Umhüllen mit einer Metallfolie, die an ihren überlappenden Rändern feuchtigkeitsdicht verschweißt wird.

Diese Metallfolie kann dann eine weitere Funktion entfalten, wenn diese nämlich unter dem Aspekt einer weiteren Ausführuhgsform betrachtet wird. In Kombination mit der magnetischen Abschirmung kann mindestens eine zusätzliche hochleitfähige Schicht in der Umhüllung integriert sein. Die zusätzliche hochleitfähige Schicht kann aus Folien, Bändern oder Einzelleitern bestehen.

Entweder im Innern der Umhüllung eingebettet oder um sie herum gelegt wird daher eine - ohne Kontakt mit den Materialstreifen - elektrisch leitende Folie aus unmagnetischem Material (beispielsweise aus Al oder aus Cu) verwendet. Die leitende Folie kann auch mit der die Umhüllung umgebenden Kunststoffmasse verschweißt sein. Es wird die beste magnetische Abschirmwirkung erzielt, wenn die hochleitfähige Schicht den Kabeladern am nächsten liegt, wenn also die leitende Folie innen liegt und die magnetische Abschirmschicht darüber liegt.

Eine in einer Kunststoffmasse verschweißte Anordnung bestehend aus elektrisch leitender Folie und magnetischer Abschinnschicht stellt dann eine Art Schichtenmantel dar, mit der zusätzlich erreicht wird, dass die umhüllten Kabeladern gegen Querwasser geschützt sind.

Die leitende Folie in der Umhüllung sollte weiterhin an ihren - in Längsrichtung betrachteten - Enden geerdet sein, um eventuelle Nullströme des Kabels durch induzierte Gegenströme kompensieren zu können. Der Leitwert (oder die Dicke) der elektrisch leitenden Folie sollte zum Führen solcher Nullströme ausgelegt oder dimensioniert sein.

Die zuvor beschriebenen Maßnahmen zur magnetischen Schirmung lassen sich auch ausführen für zwei in einer Einleiterkabel- oder in einer Zweileiterkabelkonstruktion nebeneinander liegende Kabeladern, von denen die eine den Strom in die eine Richtung führt und die andere den Strom zurückführt, wie dies beispielsweise bei einem einphasigen Wechselspannungssystem oder einem bipolaren Gleichspannungssystem der Fall ist.

Die erfindungsgemäße Umhüllung kommt beim Kabellegen an einem Montageort, beispielsweise in einem Kabelgraben oder auf Tragkonsolen in einem Kabeltunnel zum Einsatz. Die Kabelumhüllung wird vorab am Montageort auf der vorhandenen Unterlage (Grabensohle) und an der Wand in großer Länge ausgelegt und wird um die anschließend verlegten Kabeladern oder Kabeleinziehrohre herumgeschlagen und in dem Überlappungsbereich verschlossen. Ist das Ende einer Abschirmmatte erreicht, so kann eine nächste Abschirmmatte weitergeführt werden, indem diese nächste Abschirmmatte in Längsrichtung überlappend auf die erste Abschirmmatte gelegt wird. Die Länge dieses Längs-Überlappungsbereichs muss wieder ein Vielfaches der Dicke des entstehenden Spaltes betragen.

Es gibt die Situation, dass die Querausdehnung der Kabelumhüllung nicht groß genug ist, um einen Überlappungsbereich zu bilden. In einem solchen Fall muss der Abstand zwischen den längslaufenden Rändern ebenfalls magnetisch geschlossen werden. Hierzu kann eine erste Bahn einer Folienschicht aus weichmagnetischem Material vom selben Aufbau wie eine Kabelumhüllung auf der Sohle und an den Wänden des Kabelgrabens oder einer Konsole ausgelegt sein, und nach Einlegen des Kabels am Montageort eine zweite Bahn einer solchen Folienschicht von oben auf die erste Bahn gelegt werden, so dass die Ränder beider Bahnen aufeinander liegen, derart dass der Überlappungsbereich der Ränder einen kleinen magnetischen Widerstand bilden. Dazu sollten die Ränder der Bahnen mechanisch verbunden und verpresst sein. Zur Verbindung und zum Verpressen können Schienen benutzt werden, die mit Schraubverbindungen gesichert werden, wie im weiteren noch erläutert wird. Solche Folienschichten sollten ebenfalls einen Korrosionsschutz (z.B. aus einer Kunststoffbeschichtung) haben.

Insbesondere für das Verlegen im Erdboden kann zwischen Kabel und Kabelumhüllung auch zusätzlich ein Stoff mit guter Wärmeleitfähigkeit eingebracht sein, um Verlustwärme des Kabels gut an die Umgebung abführen zu können. Hierzu kommt beispielsweise sogenannter Fließbeton ("Dämmer") infrage.

In einem Muffenbereich einer Kabelkonstruktion sollte die erfindungsgemäße Anordnung ebenfalls zur Anwendung kommen. Die einfachste Maßnahme ist, die flexible Abschirmmatte von außen um die Muffe zu wickeln. Es sollte daher für den Muffenbereich die Abschirmmatte in Überlänge eingebracht werden. Über die Umwicklung kann ein Schrumpfschlauch gelegt und durch Aufschrumpfen abgedichtet werden. Im Bereich der Muffe sollten die Enden zusätzlich vorhandener Leitschichten oder Kompensationsleiter miteinander verbunden oder diese geerdet sein.

Aus der Darstellung des Aufbaus der erfindungsgemäßen Umhüllung kann der Fachmann unterschiedliche Herstellverfahren ableiten. Vorab ist schon erwähnt worden, dass ein Laminierverfahren einsetzbar ist, mit dem die hermetische Einbettung der Streifen in eine Kunststoff-Schicht vorgenommen wird. Ein anderes Vorgehen kann darin bestehen, einen oder zwei Streifen als kontinuierliches Band/Bänder mit relativ kurzem Schlag (in einer oder mehreren Lagen) auf ein durchlaufendes Kunststoff-Rohr aufzuwickeln. Hierüber kann ein Korrosionsschutz gewickelt oder extrudiert werden. Anschließend wird diese Schichtung in Längsrichtung aufgeschnitten, aufgeklappt und vom Rohr abgenommen. Dann kann die Schichtung auf ihrer anderen Seite ebenfalls korrosionsschützend beschichtet werden. Bei jedem der vorgeschlagenen Herstellverfahren sollte die Einbettung in einen solchen Kunststoff erfolgen, in den die Materialstreifen wasserdicht einbracht werden kann. Es muss dafür Sorge getragen werden, dass jegliche Korrosion der Materialstreifen ausgeschlossen ist.

Die Erfindung wird in mehreren Figuren dargestellt, wobei diese im Einzelnen zeigen
Fig. 1 eine Anordnung eines Drehstrom-Kabels mit Umhüllung,
Fig. 2 die Kabelumhüllung zur Darstellung der geschichteten Lagen,
Fig. 3 ein Längsschnitt durch die Umhüllung,
Fig. 4 eine Schienen/Schraubverbindung für nicht überlappende Ränder der Umhüllung,
Fig. 5 eine solche Verbindung zum Einsatz in einem Raumwinkel,
Fig. 6 eine erste Version einer Montage in einem Kabelgraben mit Grabenfüllung und
Fig. 7 eine zweite Version einer Montage in einem Kabelgraben.

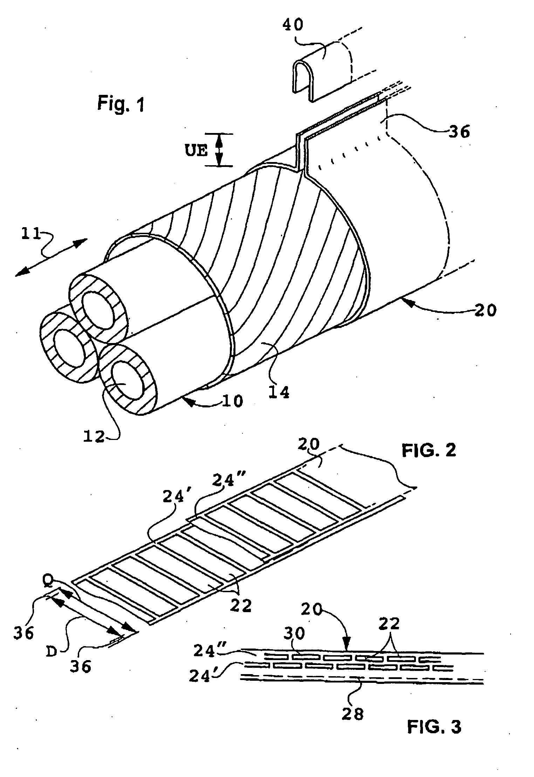

Die Einzelheiten der Erfindung werden in den Figuren mit denselben Bezugszeichen bezeichnet. Die Kabeladernumhüllung 20 ist eine Matte, bestehend aus einem Kunststoff-Träger 30, in den weichmagnetische Materialstreifen 22 eingebettet sind. Die Streifen 22 sind quer zur Längserstreckung 11 des Kabels angeordnet und gemäß Fig. 2 und 3 in zwei Lagen eingelagert. Die Materialstreifen 22 liegen quer oder nahezu quer zur Längserstreckung 11 des Kabels 10 in einer ersten Lage 24' auf Lücke der Materialstreifen einer zweiten Lage 24", wodurch die Biegsamkeit der Umhüllung nicht eingeschränkt ist. Die magnetische Vorzugsrichtung der Materialstreifen liegt in Längsrichtung der Materialstreifen und quer zur Längsachse 11 des Kabels, von dem drei (verseilte oder unverseilte) Kabeladern 12 und eine Armierung 14 noch sichtbar sind.

Die hermetische Einbettung der Streifen in den Kunststoff-Träger 30 sorgt für einen ordentlichen Korrosionsschutz. Die Umhüllung ist um das Kabel 10 herumgelegt. Parallel zur Längserstreckung 11 des Kabels ist eine Naht 36 gebildet.

Gemäß Fig. 3 liegen die Materialstreifen in beiden Lagen flach nebeneinander. Nicht dargestellt ist, dass die Materialstreifen auch in zwei Lagen zueinander im Dachziegelverband eingebracht sein können.

Die Querausdehnung Q der Umhüllung hat eine den Umfang D des Kabels übersteigende Überlänge UE. Die aus der Überlänge gebildeten Ränder 36 sind in Fig. 1 vom Kabel abstehend nebeneinander gelegt. Die Überlänge ist hochgeklappt; die Umhüllung ist in Längsrichtung des Kabels magnetisch geschlossen. Der magnetische Durchgriff des vom Kabel ausgehenden magnetischen Wechselfeldes ist minimiert.

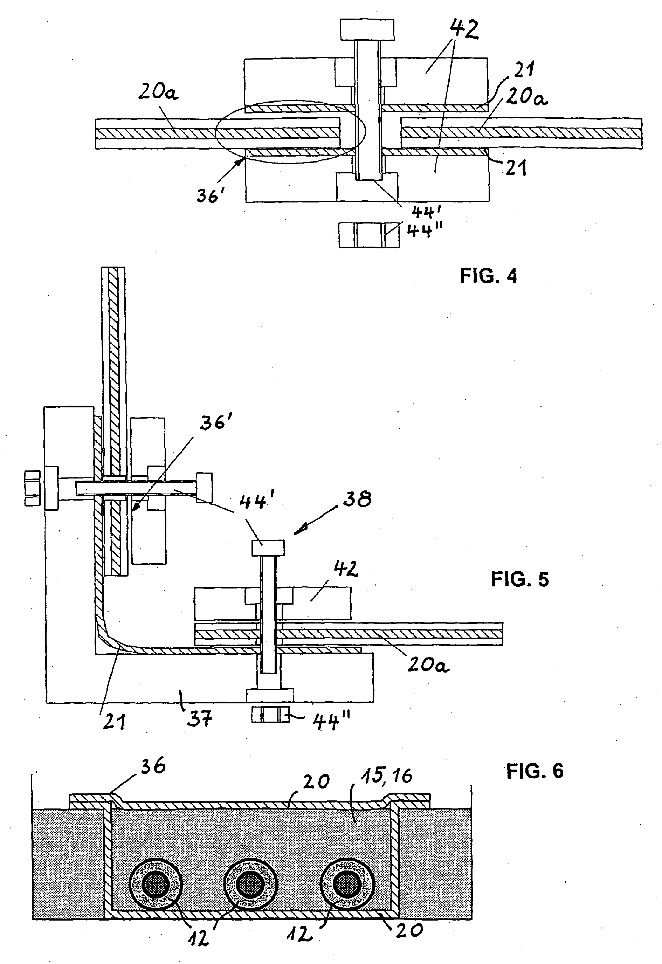

Zur Herstellung der dichten Nahtbildung ist in Fig. 1 das Aufbringen einer U-förmigen Schiene 40 gezeigt. Das Aufbringen der Schiene kann zusätzlich zu einer Verschweißung oder Verklebung der Ränder im Überlappungsbereich vorgenommen werden. Mit einer beidseitigen Erdung der Schiene 40 ist man in der Lage, eventuelle Nullströme der Kabel durch induzierte Gegenströme zu kompensieren. Die Schiene selber kann zur Verbesserung des Überlappungseffektes an ihrer Innenseite mit einer hochpermeablen Folie (21) belegt sein. Ein vergleichbarer Verschluss mit Schienen wird noch in Fig. 4 und 5 erläutert.

Im Innern der Umhüllung ist eine - ohne Kontakt mit den Materialstreifen - elektrisch leitende Folie 28 aus unmagnetischem Material eingebettet. Die leitende Folie sollte weiterhin an ihren - in Längsrichtung betrachteten - Enden geerdet sein, um eventuelle Nullströme des Kabels durch induzierte Gegenströme kompensieren zu können. Bei der Ummantelung eines Kabels mit der Umhüllung sollte die Folie 28 im Inneren (zum Kabel gewandt) zu liegen kommen.

Wie schon erwähnt, können die Ränder der Kabelumhüllung eine Überlänge bilden, und die Ränder dabei überlappend angeordnet werden. Sollten die Ränder der vorgenannten Bahnen nicht überlappend angeordnet werden können, muss der zwischen den Rändern der Bahnen vorhandene Abstand mit einer Folienschicht aus weichmagnetischem Material überdeckt werden. Luftspalte sollten vermieden werden. Diese Folienschicht sollte ebenfalls einen Korrosionsschutz (z.B. aus einer Kunststoffbeschichtung) haben.

Fig. 4 und 5 zeigen Ausführungsformen für mechanische Pressverbindungen, in denen der freie Abstand der Ränder mittels eines Schienensystems (38) überbrückt wird. Das gezeigte Schienensystem soll jedoch nicht der einzige Vorschlag für eine Art der Ränderverbindung sein. Die Ränderverbindüng kann auch durch Verschweißen oder Verkleben der Ränder im Überlappungsbereich 36' ausgeführt sein. Der Luftspalt zwischen zwei Abschirmmatten 20a wird mit Hilfe verschraubbarer Schienen 42 magnetisch überlappend geschlossen. Die Schienen 42 (aus Metall oder aus Kunststoff) liegen in Längsrichtung der Ränder und haben zur Verbesserung des Überlappungseffektes eine Schicht 21 weichmagnetischen Materials, welches hin zur Abschirmmatten gerichtet ist. Mit Schrauben 44' und Muttern 44" sind die Schienen mechanisch miteinander verpresst.

Die hochpermeablen Folien dürfen nicht geknickt werden, da sie bruchempfindlich sind. Winkelverbindungen sind besonders kritisch hinsichtlich des Knickens der Folien. Diese werden jedoch benötigt, wo es beispielsweise um die Schirmung von Räumen geht. Eine winklige Verbindungsanordnung ist in Fig. 5 gezeigt. Da die parallelen Ränder der Abschirmmatten 20a nicht nah genug beieinander liegen und die Materialstreifen nicht geknickt werden dürfen, wird eine zusätzliche Schicht 21 einer weichmagnetischen Folie in den Winkel gelegt. Die Ränder der Folie 21 werden nach dem in Fig. 4 gezeigten Klemmprinzip miteinander verpresst, wobei hier ebenfalls Schienen 42, Schrauben 44' und Muttern 44" eingesetzt werden. Die Schiene 42 (sowohl nach Fig. 4 als auch nach Fig. 5) kann ebenfalls beidseitig geerdet sein.

Beide in den Figuren 4 und 5 gezeigte Varianten können auch miteinander vertauscht werden. Das heißt, eine Winkelverbindung kann nach dem Prinzip der Fig. 4 ausgebildet und eine Überbrückung einer Fuge kann nach dem Prinzip der Fig. 5 ausgebildet sein.

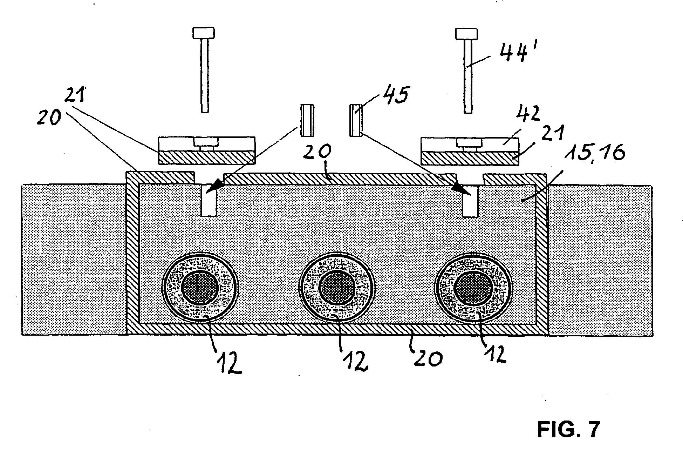

Anstatt dass die Kabelumhüllung um mindestens eine Kabelader 12 herumgelegt wird, kann die Kabelumhüllung auch in der Wand eines Kabelgrabens ausgelegt sein. In Fig. 6 und Fig. 7 ist eine erste Bahn der Kabelumhüllung 20 im Grund und an den Wänden des Kabelgrabens 15 ausgelegt. Nach Einlegen der Kabeladern 12 wird der offene Raum innerhalb der Abschirmmatte mit Füllmaterial (beispielsweise Magerbeton) ausgefüllt oder ausgegossen. Das Füllmaterial kann auch ein Stoff mit guter Wärmeleitfähigkeit sein, um Verlustwärme des Kabels gut an die Umgebung abführen zu können. Hierzu kommt beispielsweise auch sogenannter Fließbeton ("Dämmer") infrage.

Nach Fig. 6 wird nach Einlegen der Kabeladern 12 eine zweite Bahn 20 der Kabelumhüllung von oben aufgelegt, wobei die Ränder beider Bahnen aufeinander liegen. Zusätzlich sollten die Ränder im Überlappungsbereich 36 nach einem der zuvor beschriebenen Verfahren verpresst sein.

Nach Fig. 7 wird eine Abschirmmatte 20 im Kabelgraben ausgelegt und die oberen Ränder werden nach oben offen gelassen oder hochgeklappt. Das Kabel wird (oder Einleiterkabel 12 oder auch Kabel in Kunststoffrohren) im Grund des Kabelgrabens auf die Abschirmmatte aufgelegt. Der offene Raum 15 innerhalb der Abschirmmatte wird mit Füllmaterial ausgefüllt oder ausgegossen. Auf der Oberfläche der Füllung werden zwei Längsschlitze ausgespart oder Bohrungen herausgearbeitet. Die Abschirmmatte wird zwischen den Schlitzen oder Bohrungen auf dem Füllblock ausgelegt. Auf die Überlappungszone im Bereich der Längsschlitze werden Verbinderschienen 42 aufgesetzt und mit Hilfe von Schrauben 44' und Dübeln 45 (die in die Längsschlitze geschoben werden) befestigt. Gegebenenfalls kann noch ein Korrosionsschutz oberhalb der oberen Lage oder eine zusätzliche Schicht Füllmaterial aufgebracht werden.

### Bezugszeichen

- 10: Kabel
- 11: Längserstreckung
- 12: Kabelader
- 14: Armierung
- 15: Kabelgraben
- 16: Grabenfüllung
- 17: Schlitz, Bohrung
- 20: Kabelumhüllung
- 20a: Abschirmmatte
- 21: Folienschicht
- 22: Materialstreifen (Bänder)
- 24', 24": Lagen
- 28: elektrisch leitende Folie
- 30: Kunststoff
- 36; 36': Überlappungsbereich
- 37: Winkelblech
- 38: Winkelverbinder
- 40: Verschlussschiene
- 42: Verbinderschiene
- 44'; 44": Schraube, Muttern
- 45: Dübel
- R: Rand
- UE: Überlänge
- D: Umfang des Kabels
- Q: Querdimension

## Patentansprüche

1. Anordnung zum Umhüllen von mindestens den Kabeladern eines Mittel- oder Hochspannungskabels,
• wobei die Kabeladernumhüllung (20, 20a) aus einem biegsamen flächigen Gebilde besteht, welches auf einer Strecke des Kabels (10) um mindestens eine Kabelader (12) gelegt ist und parallel zur Längserstreckung (11) des Kabels (10) mindestens ein Überlappungsbereich (36, 36') gebildet ist,
• wobei die Umhüllung (20) Streifen (22) aus weichmagnetischem Material enthält,
• die quer oder nahezu quer zur Kabellängserstreckung (11) angeordnet sind,
• und die Streifen (22) mindestens in zwei Lagen (24', 24") derart eingelagert sind, dass die Streifen (22) in einer ersten Lage (24', 24") auf Lücke der Materialstreifen (22) einer zweiten Lage (24") liegen.

2. Kabelumhüllung nach Anspruch 1, **dadurch gekennzeichnet, dass** die Querausdehnung (Q) des flächigen Gebildes eine den Umfang (D) einer Kabelader (12) oder eines Kabels (10) übersteigende Überlänge (UE) hat.

3. Kabelumhüllung nach Anspruch 2, **dadurch gekennzeichnet, dass** von der Überlänge (UE) gebildete und in Kabellängserstreckung verlaufende Ränder der Kabelumhüllung (20) übereinander überlappend oder von der Kabelader (12) oder vom Kabel abstehend verlegt sind.

4. Kabelumhüllung nach Anspruch 2, **dadurch gekennzeichnet, dass** von der Überlänge (UE) gebildete und in Kabellängserstreckung (11) verlaufende Ränder der Kabelumhüllung (20) mit Abstand angeordnet sind, und der Abstand mit einer Schicht (21) vom selben Aufbau wie die Kabelumhüllung überdeckt ist.

5. Kabelumhüllung nach einem der vorhergehenden Ansprüche, **dadurch gekennzeichnet, dass** die magnetische Vorzugsrichtung der Materialstreifen (22) in Längsrichtung der Materialstreifen liegt.

6. Kabelumhüllung nach Anspruch 5, **dadurch gekennzeichnet, dass** die Materialstreifen (22) in einer der Lagen (24', 24") flach nebeneinander liegen.

7. Kabelumhüllung nach Anspruch 5, **dadurch gekennzeichnet, dass** die Materialstreifen (22) in zwei Lagen (24', 24") zueinander im Dachziegelverband eingebracht sind.

8. Kabelumhüllung nach einem der vorhergehenden Ansprüche, **dadurch gekennzeichnet, dass** die Materialstreifen (22) aus Silizium-Eisen oder aus µ-Metall bestehen.

9. Kabelumhüllung nach einem der vorhergehenden Ansprüche, **dadurch gekennzeichnet, dass** die Materialstreifen (22) mit einem Korrosionsschutz versehen sind und dieser aus einer allseitigen Zinkbeschichtung oder einer allseitigen Kunststoffbeschichtung der Materialstreifen (22) besteht.

10. Kabelumhüllung nach einem der vorhergehenden Ansprüche, **dadurch gekennzeichnet, dass** ohne Kontakt mit den Materialstreifen (22) im Innern der Umhüllung (20) eine elektrisch leitende Folie (28) aus unmagnetischem Material eingebettet ist.

11. Kabelumhüllung nach Anspruch 10, **dadurch gekennzeichnet, dass** die Folie (28) an ihrem ersten und an ihrem zweiten Ende geerdet ist.

12. Kabelumhüllung nach einem der vorhergehenden Ansprüche, **dadurch gekennzeichnet, dass** die Kabelumhüllung (20) in der Wand eines Kabelgrabens (15) ausgelegt ist.

13. Kabelumhüllung nach Anspruch 12, **dadurch gekennzeichnet, dass** zwischen mindestens einer Kabelader und der Kabelumhüllung (20) ein gut wärmeleitender Stoff (16) eingebracht ist.

## Claims

1. An arrangement for serving at least the cable cores of a medium-voltage or high-voltage cable,
- the cable core serving (20, 20a) consisting of a flexible two-dimensional structure which is laid on a length of the cable (10) around at least one cable core (12) and at least one region of overlap (36, 36') being formed parallel to the longitudinal extent (11) of the cable (10),
- the serving (20) containing strips (22) of magnetically soft material,
- which are arranged transversely or virtually transversely to the longitudinal extent (11) of the cable,
- and the strips (22) being incorporated at least in two layers (24', 24") such that the strips (22) in a first layer (24', 24") lie on gaps of the material strips (22) of a second layer (24").

2. A cable serving according to Claim 1, **characterised in that** the transverse extent (Q) of the two-dimensional structure has an overlength (UE) which exceeds the circumference (D) of a cable core (12) or of a cable (10).

3. A cable serving according to Claim 2, **characterised in that** edges of the cable serving (20) which are formed by the overlength (UE) and extend in the longitudinal extent of the cable are laid over one another overlapping or protruding from the cable core (12) or from the cable.

4. A cable serving according to Claim 2, **characterised in that** edges of the cable serving (20) which are formed by the overlength (UE) and extend in the longitudinal extent (11) of the cable are arranged spaced apart, and the spacing is covered with a layer (21) of the same construction as the cable serving.

5. A cable serving according to one of the preceding claims, **characterised in that** the preferred direction of magnetisation of the material strips (22) lies in the longitudinal direction of the material strips.

6. A cable serving according to Claim 5, **characterised in that** the material strips (22) in one of the layers (24', 24") lie flat next to one another.

7. A cable serving according to Claim 5, **characterised in that** the material strips (22) are introduced in two layers (24', 24") relative to each other in an imbricated pattern.

8. A cable serving according to one of the preceding claims, **characterised in that** the material strips (22) consist of silicon-iron or of mu-metal.

9. A cable serving according to one of the preceding claims, **characterised in that** the material strips (22) are provided with protection against corrosion and said protection consists of a zinc coating on all sides or a plastics coating on all sides of the material strips (22).

10. A cable serving according to one of the preceding claims, **characterised in that** an electrically conductive foil (28) of non-magnetic material is embedded without contact with the material strip (22) in the interior of the serving (20).

11. A cable serving according to Claim 10, **characterised in that** the foil (28) is earthed at its first and at its second end.

12. A cable serving according to one of the preceding claims, **characterised in that** the cable serving (20) is laid out in the wall of a cable trench (15).

13. A cable serving according to Claim 12, **characterised in that** a substance (16) which conducts heat effectively is introduced between at least one cable core and the cable serving (20).

## Revendications

1. Dispositif pour envelopper au moins les fils d'un câble moyenne tension ou haute tension,
- l'enveloppe (20, 20a) des fils de câble étant formée d'une structure plane flexible qui est placée autour d'au moins un fil de câble (12) sur un trajet du câble (10) et au moins une zone de chevauchement (36, 36') est formée parallèlement à l'étendue longitudinale (11) du câble (10),
- l'enveloppe (20) contenant des bandes (22) d'un matériau magnétique doux,
- qui sont disposées de manière transversale ou pratiquement transversale à l'étendue longitudinale du câble (11),
- et les bandes (22) sont déposées au moins en deux couches (24', 24") de manière à ce que les bandes (22) d'une première couche (24', 24") soient situées sur un intervalle entre les bandes de matériau (22) d'une seconde couche (24").

2. Enveloppe de câble selon la revendication 1, **caractérisée par le fait que** la dimension transversale (Q) de la structure plane présente une surlongueur (UE) par rapport à la circonférence (D) d'un fil de câble (12) ou d'un câble (10).

3. Enveloppe de câble selon la revendication 2, **caractérisée par le fait que** des bords de l'enveloppe de câble (20) formés par la surlongueur (UE) et s'étendant dans la direction de l'étendue longitudinale du câble (11) sont superposés l'un à l'autre ou placés à une distance du fil de câble (12) ou du câble.

4. Enveloppe de câble selon la revendication 2, **caractérisée par le fait que** des bords de l'enveloppe de câble (20) formés par la surlongueur (UE) et s'étendant dans la direction de l'étendue longitudinale du câble (11) sont situés à une distance l'un de l'autre et la distance est couverte par une couche (21) ayant la même structure que l'enveloppe de câble.

5. Enveloppe de câble selon l'une des revendications précédentes, **caractérisée par le fait que** le sens magnétique préférentiel des bandes de matériau (22) est dans la direction longitudinale des bandes de matériau.

6. Enveloppe de câble selon la revendication 5, **caractérisée par le fait que** les bandes de matériau (22) sont posées à plat les unes à côté des autres dans une des couches (24', 24").

7. Enveloppe de câble selon la revendication 5, **caractérisée par le fait que** les bandes de matériau (22) dans deux couches (24', 24") sont imbriquées les unes par rapport aux autres.

8. Enveloppe de câble selon l'une des revendications précédentes, **caractérisée par le fait que** les bandes de matériau (22) sont en fer au silicium ou en métal µ.

9. Enveloppe de câble selon l'une des revendications précédentes, **caractérisée par le fait que** les bandes de matériau (22) sont pourvues d'une protection contre la corrosion et celle-ci est formée d'un revêtement de zinc sur tous les côtés ou d'un revêtement en matière plastique sur tous les côtés des bandes de matériau (22).

10. Enveloppe de câble selon l'une des revendications précédentes, **caractérisée par le fait qu'**une feuille électroconductrice (28) en matériau non magnétique est insérée à l'intérieur de l'enveloppe (20) sans contact avec les bandes de matériau (22).

11. Enveloppe de câble selon la revendication 10, **caractérisée par le fait que** la feuille (28) est reliée à la terre à sa première et à sa seconde extrémité.

12. Enveloppe de câble selon l'une des revendications précédentes, **caractérisée par le fait que** l'enveloppe de câble (20) est posée dans la paroi d'un caniveau à câbles (15).

13. Enveloppe de câble selon la revendication 12, **caractérisée par le fait qu'**une matière bonne conductrice de chaleur (16) est insérée entre au moins un fil de câble et l'enveloppe de câble (20).
